# FASCICULE DE BREVET EUROPEEN

(11) **EP 0 936 091 B1**
(45) Date de publication et mention de la délivrance du brevet: **02.05.2002**
(21) Numéro de dépôt: 99400241.8
(22) Date de dépôt: 03.02.1999
(51) Int. Cl.: B60H 1/34

(54) **Installation de ventilation forcée, notamment pour véhicule**
Zwangsbelüftungsvorrichtung, insbesondere für Fahrzeuge
Forced ventilation device, in particular for vehicle

(30) Priorité: 10.02.1998 FR 9801554
(43) Date de publication de la demande: 18.08.1999
(73) Titulaire: Regie Autonome des Transports Parisiens RATP, 75599 Paris Cedex 12 (FR)
(72) Inventeur: Florent, Pierre, 59990 Preseau (FR)
(74) Mandataire: Jacobson, Claude

(56) Documents cités:
- DE-A- 2 933 083
- DE-U- 7 525 560
- US-A- 3 503 320
- US-A- 4 751 980
- US-A- 5 340 358

## Description

L'invention concerne la ventilation d'espaces, par exemple l'espace destiné aux voyageurs dans des véhicules routiers ou ferroviaires, et plus particulièrement une installation de ventilation forcée comportant une unité de soufflage ou plusieurs unités de soufflage indépendantes pouvant être réparties dans l'espace à ventiler en fonction des dimensions de cet espace.

Jusqu'à une époque récente, la ventilation des véhicules, en vue d'éviter les inconvénients du confinement, éliminer les odeurs éventuelles, et évacuer le gaz carbonique résultant de la respiration des voyageurs, était assurée par des moyens divers, dont aucun ne donne satisfaction si l'on désire que le coût reste raisonnable vis-à-vis du coût global du véhicule.

Par exemple, les ventilateurs sont bruyants, les glaces à abattant ne permettent qu'une faible ouverture, les glaces coulissantes ne peuvent être utilisées à pleine ouverture par suite des risques d'accidents, les trappes de toit ne sont efficaces que pour une vitesse de véhicule supérieure à 20 km/h environ, et les installations de climatisation sont onéreuses tant à la fabrication et au montage qu'à l'exploitation (surconsommation énergétique sensible, et maintenance délicate).

Par ailleurs, il est maintenant admis qu'un confort correct des voyageurs exige un débit de gaz de ventilation de l'ordre de 25 m³/h par occupant de l'espace à ventiler.

Pour répondre à cette exigence, on a créé des installations comportant un appareil insuffleur en toiture, un réseau de gaine dans des voussoirs latéraux, et des dispositifs de diffusion d'air de ventilation pour diffuser de l'air pulsé dans l'espace à ventiler en tentant de le répartir de manière appropriée.

Cependant, ces installations sont onéreuses, et n'apportent pas aux occupants du local tout le confort souhaitable.

En effet, aux températures habituelles dans nos régions en saison d'été, le soufflage approximativement vertical d'un gaz de ventilation, à température ambiante, procure une fraîcheur agréable (équivalence à une baisse de température de l'ordre de 4°C) à condition que la vitesse du gaz au voisinage du corps et du visage soit sensiblement uniforme et de l'ordre de 0,3 à 0,6 m/s.

Comme ces installations pulsent de l'air à une vitesse seulement de l'ordre de 0,15 m/s au niveau du corps et du visage des occupants de l'espace ventilé, l'obtention d'une sensation de confort nécessite un refroidissement préalable de l'air pulsé, solution onéreuse et consommatrice d'énergie.

On a également créé des installations munies de dispositifs de soufflage d'air de ventilation tels que des buses. Cependant, les jets issus de ces buses ne sont pas suffisamment divergents et n'apportent donc également pas le confort attendu ; l'obtention d'une vitesse uniforme de 0,3 à 0,6 m/s à quelques décimètres de la sortie de la buse sur une surface relativement étendue imposerait un très faible débit initial du jet, et même la multiplication des buses ne permettrait pas d'atteindre le débit nécessaire pour une bonne ventilation dans le cas où un grand nombre de personnes occupent le volume à ventiler.

L'invention a pour but de remédier à ces inconvénients et concerne à cet effet une installation de ventilation forcée notamment pour véhicule, comportant au moins une unité de soufflage comprenant un motoventilateur et des dispositifs de soufflage tels que des buses, installation caractérisée en ce qu'à chaque motoventilateur, est relié un groupe de soufflage comprenant un dispositif de soufflage central et au moins deux dispositifs de soufflage périphériques répartis autour du dispositif de soufflage central, les dispositifs de soufflage comportent une enveloppe tubulaire et un guide de soufflage logé dans l'enveloppe et comprenant au moins trois rampes de guidage de jet d'air s'étendant chacune, en allant d'amont en aval des dispositifs de soufflage, tout d'abord selon un plan radial, puis hélicoïdalement le long d'une partie rectiligne d'un axe approximativement central du dispositif de soufflage.

La forme hélicoïdale de la rampe de guidage, ou des rampes de guidage, est à l'origine d'un jet plus épanoui que les jets rectilignes, et présentant une diffusion turbulente plus importante, ce qui permet d'obtenir des vitesses plus faibles qu'un jet classique à une même distance de l'embouchure du dispositif de soufflage.

Comme également, l'obtention d'une vitesse de soufflage uniforme à une distance donnée ainsi que la surface ventilée sont essentiellement dépendantes du paramètre angulaire de sortie de l'hélicoïde ainsi que de l'angle de l'axe des jets périphériques par rapport à celui du jet central, les jets sortant des dispositifs à rampe hélicoïdale selon une configuration approximativement tronconique, et l'inclinaison divergente vers l'aval des dispositifs de soufflage périphérique par rapport au dispositif de soufflage central, permettent d'obtenir une diffusion correcte dans un angle solide très ouvert, et des jets peuvent être mis en interaction de manière à épanouir et uniformiser la vitesse de l'air dans un volume de plus grandes dimensions qu'avec les techniques conventionnelles.

Grâce au fait que l'installation est constituée, selon les dimensions de l'espace à ventiler, d'une ou plusieurs unités de soufflage comprenant chacune un motoventilateur auquel est relié un unique groupe de dispositifs de soufflage, le motoventilateur peut être de faible puissance et ainsi peu bruyant.

L'installation selon l'invention peut comporter de plus une ou plusieurs des caractéristiques suivantes :
- la partie rectiligne de l'axe central des dispositifs de soufflage périphériques est inclinée et diverge par rapport à celle de l'axe central du dispositif de soufflage central en allant vers l'aval ;
- les rampes de guidage sont des ailettes s'étendant chacune tout d'abord selon un plan radial puis en forme d'hélicoïde dans l'enveloppe du dispositif de soufflage ;
- elle comporte plusieurs rampes de guidage s'étendant chacune tout d'abord selon un plan radial puis en forme d'hélicoïde autour d'une tige s'étendant axialement dans l'enveloppe du dispositif de soufflage ;
- le guide de soufflage est monté fixe dans l'enveloppe du dispositif de soufflage ;
- les parties hélicoïdales des rampes de guidage des dispositifs de soufflage central et périphériques d'un même groupe de soufflage s'étendent en forme d'hélicoïdes enroulées dans le même sens ;
- elle comporte plusieurs unités de soufflage, et les parties hélicoïdales des rampes de guidage des dispositifs de soufflage de toutes les unités s'étendent en forme d'hélicoïdes enroulées dans le même sens ;
- les dispositifs de soufflage périphérique émettent chacun un jet de gaz de ventilation dont une région se mélange avec une région respective d'un jet de gaz de ventilation émis par le dispositif de soufflage central ;
- les dispositifs de soufflage périphériques émettent chacun un jet de gaz de ventilation dont au moins une région se mélange avec une région du jet de gaz de ventilation émis par un autre dispositif de soufflage périphérique ;
- les dispositifs de soufflage périphérique émettent chacun un jet de gaz de ventilation dont deux régions se mélangent chacune avec une région d'un jet de gaz de ventilation émis par un autre dispositif de soufflage périphérique respectif ;
- les dispositifs de soufflage émettent chacun un jet de gaz de ventilation s'épanouissant avec une forme générale approximativement tronconique ;
- le groupe de soufflage émet un gaz de ventilation dont la vitesse, dans un volume situé à quelques décimètres en aval des guides de soufflage, est approximativement uniforme et de l'ordre de 0,3 à 0,6 m/s.
- le groupe de soufflage débite un gaz de ventilation avec un débit égal approximativement à 300m³/h ;
- elle comprend au moins un groupe de soufflage comportant un dispositif de soufflage central à quatre rampes de guidage, et quatre dispositifs de soufflage périphériques à trois rampes de guidage ;
- elle comprend au moins un groupe de soufflage comportant un dispositif de soufflage central à trois rampes de guidage, et quatre dispositifs de soufflage périphériques également à trois rampes de guidage ;
- elle comprend au moins un groupe de soufflage comportant un dispositif de soufflage central à trois rampes de guidage, et six dispositifs de soufflage périphériques également à trois rampes de guidage ;
- la partie hélicoïdale des rampes de guidage présente un pas variable dont la longueur diminue d'amont en aval.

D'autres caractéristiques et avantages de l'invention ressortiront de la description qui va suivre de formes de réalisation de cette invention données à titre d'exemples non limitatifs, illustrée par les dessins joints dans lesquels :
- les figure 1a et 1b sont des vues de face d'une partie respectivement de deux exemples de réalisation d'un groupe de soufflage entrant dans la constitution d'une installation selon l'invention,
- les figures 2a et 2b sont des vues de dessus de la partie du groupe de soufflage des figures 1a et 1b respectivement,
- les figures 3a et 3b sont des vues de dessous de la partie du groupe de soufflage des figures 1a et 1b respectivement,
- la figure 4 est une vue de face d'un guide de soufflage équipant les dispositifs de soufflage du groupe des figures 1a, 1b à 3a, 3b, dans une première forme de réalisation,
- la figure 5 est une vue de dessus du guide de soufflage de la figure 4,
- la figure 6 est une vue de face d'un guide de soufflage dans une deuxième forme de réalisation, et
- la figure 7 est une vue de dessus du guide de soufflage de la figure 6.

L'installation de ventilation forcée selon l'invention, illustrée par les figures, est plus particulièrement destinée à la ventilation de l'espace intérieur de véhicules ; elle comporte une unité de soufflage, ou plusieurs unités de soufflage convenablement réparties en fonction de la configuration de l'espace à ventiler, pour introduire dans le véhicule, en tant que gaz de ventilation, de l'air prélevé à l'extérieur de celui-ci.

Les unités de soufflage comprennent chacune un motoventilateur comportant une volute dont la sortie est reliée, directement ou par une conduite de liaison pouvant être très courte, à l'entrée d'un groupe de dispositifs de soufflage tels que des buses.

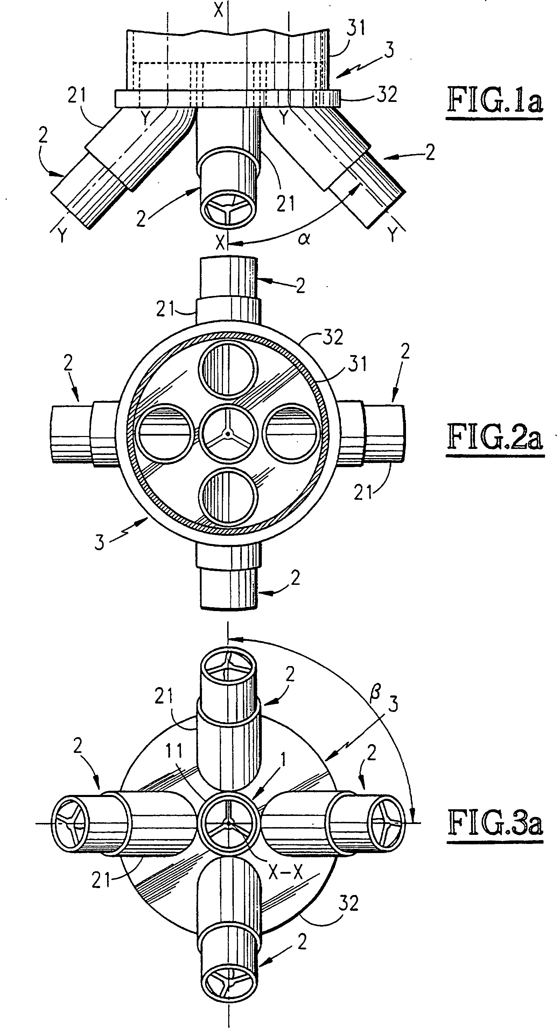

Les figures 1a, 2a et 3a montrent un tel groupe de dispositifs de soufflage, qui comporte une buse centrale 1 et quatre buses périphériques 2 réparties à 90° autour de la buse centrale, prolongeant un collecteur 3 tubulaire destiné à être raccordé à la conduite de liaison ou directement au motoventilateur ; ce collecteur comporte à cet effet une région de raccordement 31 cylindrique à section droite circulaire et une embase 32 portant les buses 1, 2.

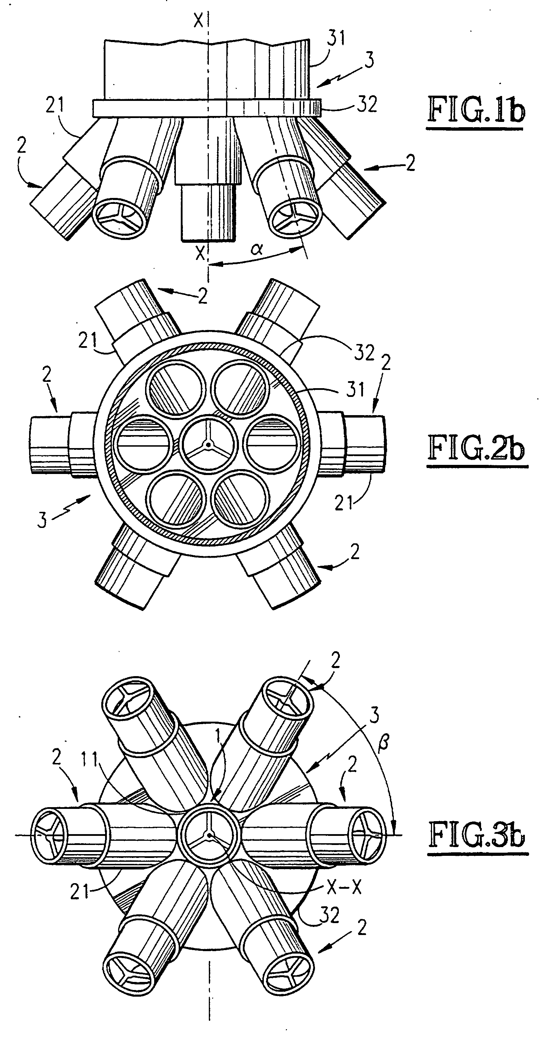

Ces buses 1, 2 comportent une enveloppe tubulaire 11, 21 dont une région d'entrée débouche dans le collecteur 3 à travers l'embase 32 et dont une région de sortie est en saillie hors du collecteur, vers le bas si l'on se réfère à la figure 1 où le groupe de soufflage est représenté dans la position qu'il occupe lorsqu'il est fixé au plafond d'un véhicule en vue de souffler de l'air de ventilation vers le plancher sur les occupants. L'enveloppe 11 de la buse centrale s'étend rectilignement et prolonge le collecteur coaxialement. Le nombre de dispositifs de soufflage périphériques 2 est choisi en fonction des besoins, et par exemple des groupes comportant deux buses périphériques 2 diamétralement opposées de part et d'autre d'une buse centrale 1 peuvent convenir à un espace étroit et allongé tel qu'un couloir de voiture de chemin de fer notamment ; en revanche, pour de larges espaces, le dispositif de soufflage central 1 est entouré d'un plus grand nombre de dispositifs de soufflage périphériques 2, par exemple quatre buses ou davantage, répartis régulièrement ou non le long d'une circonférence centrée sur l'axe central X-X du dispositif de soufflage central ; ainsi, les figures 1b, 2b et 3b montrent un groupe à six buses périphériques 2 réparties à 60° autour de la buse centrale 1 et présentant par ailleurs le même agencement, les organes correspondants portant les mêmes repères numériques que sur les figures 1a à 3a.

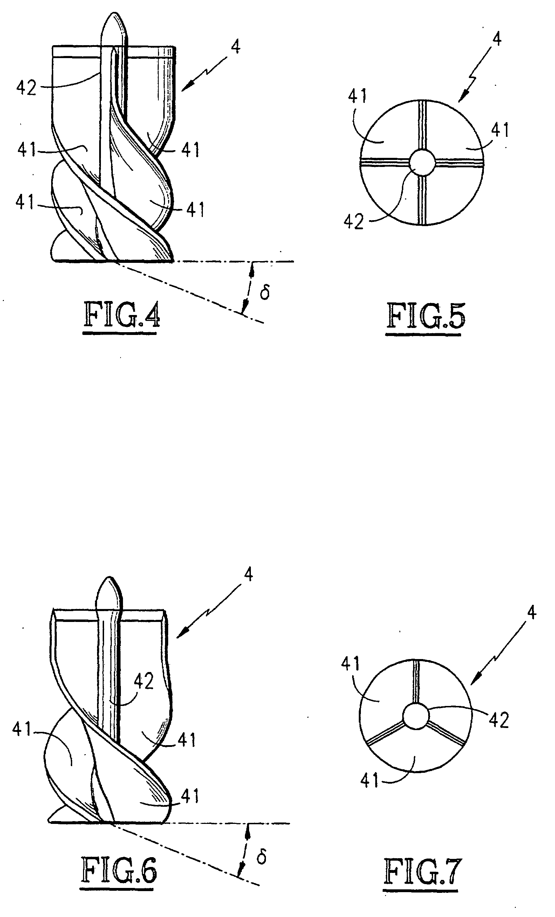

A l'intérieur de l'enveloppe 11, 21, les dispositifs de soufflage sous la forme de buses comportent un guide de soufflage 4 (figures 4 à 7) afin de guider le jet d'air parcourant la buse hélicoïdalement au moins dans la région de sortie de celle-ci. Ce guide de soufflage 4 est formé par une ou plusieurs rampes d'abord longitudinales puis devenant hélicoïdales constituées ici par une ou plusieurs ailettes 41 s'étendant d'amont en aval tout d'abord selon un plan radial et longitudinal puis en forme d'hélicoïde dans l'enveloppe 21, 31, autour d'une tige axiale 42 s'étendant elle-même le long d'au moins une partie de l'axe central du dispositif de soufflage.

Au moins une partie rectiligne Y-Y de l'axe central des dispositifs de soufflage périphériques 2 autour de laquelle s'étendent les ailettes 41 est inclinée en divergeant par rapport à l'axe central X-X du dispositif de soufflage central 1 en allant d'amont en aval des dispositifs de soufflage 1, 2, et coupe cet axe central X-X en faisant un angle choisi comme on le verra dans la suite.

Dans la forme de réalisation représentée sur les figures, le collecteur 3 et les enveloppes tubulaires 11, 21 des buses sont constitués en une seule pièce ; l'enveloppe 11 de la buse centrale s'étend rectilignement, et les enveloppes 21 des buses périphériques comportent une région d'entrée s'étendant parallèlement à l'enveloppe 11 de la buse centrale, un coude à angle obtus, et une région de sortie s'étendant le long de la partie Y-Y de l'axe central qui est inclinée et diverge par rapport à l'axe central X-X de la buse centrale en allant vers l'aval ; c'est dans au moins une partie de cette région de sortie que s'étend le guide de soufflage 4, constitué ici par les ailettes 41 s'étendant autour d'une tige centrale 42, qui est fixé dans l'enveloppe ; on peut noter que ces ailettes sont montées fixes à l'intérieur de l'enveloppe et qu'un mouvement de rotation de celles-ci engendrerait un bruit important ; l'angle d'inclinaison de l'hélice extérieure de l'hélicoïde par rapport à l'axe central ou son angle δ par rapport au plan perpendiculaire à l'axe central est également choisi comme on le verra dans la suite. Intérieurement, le collecteur 3 peut présenter une forme appropriée pour guider l'air issu du motoventilateur vers les différents dispositifs de soufflage 1, 2 en favorisant son écoulement et en réduisant les pertes de charge afin notamment que le bruit émis soit minimal.

Les dispositifs de soufflage périphériques 2 peuvent naturellement ne pas présenter une forme coudée, mais une forme rectiligne sur toute leur longueur, leur axe central étant alors lui-même rectiligne et incliné par rapport à celui du dispositif de soufflage central 1, d'un angle qui est comme on l'a vu l'un des paramètres fondamentaux de l'installation.

Lorsque le motoventilateur est en fonctionnement, il insuffle, éventuellement par l'intermédiaire de la conduite de liaison, de l'air de ventilation dans le collecteur du groupe de soufflage, d'où l'air est distribué aux buses 1, 2.

Comme, dans la région de sortie des buses, le jet d'air est forcé selon un trajet hélicoïdal, à la sortie de chaque buse il s'épanouit en formant approximativement un tronc de cône d'autant plus évasé que l'angle δ de l'hélicoïde défini plus haut est petit ; en corollaire, on notera que pour un même débit initial, la vitesse en un point du tronc de cône est d'autant plus faible que l'angle δ est petit ; si les jets issus des buses n'ont aucune interaction, l'uniformisation des vitesses exige un angle relativement important de l'hélice extérieure de l'hélicoïde par rapport à l'axe central de la buse, d'où une forte perte de charge, et par voie de conséquence un groupe motoventilateur bruyant dans la gamme de débits désirée.

En revanche, selon l'invention, on mélange certaines régions périphériques des jets voisins, à savoir une région de chaque jet périphérique avec une région du jet central, et si possible deux autres régions chacune avec une région du jet périphérique le plus voisin, en faisant en sorte que les troncs de cône de ces jets se coupent légèrement à leur périphérie. Comme, selon l'invention, les jets sont issus de dispositifs de soufflage dont de préférence les rampes de guidage forment des hélicoïdes enroulées dans le même sens, l'antagonisme des composantes tangentielles des vitesses dans la région d'intersection produit une homogénéisation favorable du mélange et des vitesses résultantes dans un volume situé à quelques décimètres en aval des guides de soufflage. Comme l'uniformisation des vitesses peut être obtenue au moyen de débits qui ne sont pas trop faibles, un petit nombre de jets dans chaque groupe permet de satisfaire aux conditions de débit assurant une ventilation conforme aux normes.

Plus précisément, la distance et les dimensions du volume dans lequel les vitesses sont uniformisées dépendent de la vitesse de sortie du jet, de l'angle d'inclinaison de l'hélice extérieure par rapport à l'axe central de la buse ou de l'angle δ par rapport au plan perpendiculaire à cet axe, de l'angle β entre la projection sur un plan horizontal des axes des jets périphériques voisins, de l'angle α entre la partie rectiligne Y-Y de l'axe des jets périphériques et l'axe X-X du jet central, et du nombre d'ailettes dans chaque buse. Plusieurs combinaisons différentes peuvent donner des résultats voisins dans un volume donné.

Ainsi, par exemple, on obtient, pour un débit global de 300 m³/h convenable dans un véhicule de transport en commun, des vitesses présentant une homogénéité satisfaisante, comprises entre 0,3 et 0,6 m/s à 1,5 m du sol, dans les trois cas suivants :
Cas N° 1:
   - buse centrale à quatre ailettes avec δ = 17° environ
   - quatre buses périphériques à trois ailettes avec δ = 25° environ et β = 90°
   - diamètre des hélicoïdes = 25,4 mm environ
   - α = 45° environ.
Cas N° 2 :
   - buse centrale à trois ailettes avec δ = 25° environ
   - quatre buses périphériques à trois ailettes avec δ = 25° environ et β = 90°
   - diamètre des hélicoïdes = 25.4 mm environ
   - α = 67° 30' environ.
Cas N° 3 :
   - buse centrale à trois ailettes avec δ = 25° environ
   - six buses périphériques à trois ailettes avec δ = 30° environ et β = 60°
   - diamètre des hélicoïdes = 33,3 mm environ
   - α = 45° environ.

Dans ces exemples, le résultat obtenu convient pour la ventilation d'un autobus ou d'un autocar, la mise en oeuvre de sept unités identiques permettant de répondre aux conditions imposées de vitesse et de débit.

Cependant, ces trois exemples montrent l'importance des paramètres fondamentaux que sont les angles δ, α, β, et la vitesse axiale initiale, pour obtenir l'homogénéïsation des vitesses à une distance déterminée de l'origine du soufflage, et satisfaire aux critères de bruit en diminuant les pertes de charge et les vitesses initiales pour un débit donné ; en particulier, le cas N° 3 illustre, vis-à-vis des cas N° 1 et 2, la réduction des pertes de charge de 80 mm d'eau à 15 mm d'eau, et le bruit de 75 db à 59 db, pour la même efficacité, l'augmentation du nombre de buses périphériques permettant la diminution des vitesses initiales.

La similitude du comportement des jets basés sur l'angle δ de l'hélicoïde en regard du diamètre de l'origine du soufflage et de la valeur de la composante axiale de la vitesse initiale, est également fondamentale et explique les résultats obtenus dans les trois cas mentionnés plus haut.

Il est possible de jouer aussi sur les angles β pour adapter le groupe de soufflage à la longueur et à la largeur du volume à ventiler ; par exemple, dans un même groupe, les buses peuvent être orientées selon des angles β différents, en fonction de la forme du volume à ventiler.

On notera également que pour une unité de soufflage donnée, en faisant varier la vitesse du motoventilateur, on obtient une variation du débit initial qui permet de modifier l'emplacement de la zone dite « de confort » dans laquelle les vitesses sont comprises entre 0,3 et 0,6 m/s, et notamment de la faire monter ou descendre. Par ailleurs, la sensation de confort étant subjective et dépendant de la température, une ventilation à plus grande vitesse est nécessaire en cas de forte chaleur, tandis que la vitesse doit être diminuée par temps frais.

Compte tenu de l'influence de l'angle δ de sortie des hélicoïdes et de l'intérêt de pouvoir choisir le meilleur angle possible en fonction des besoins, les hélicoïdes présentent un pas variable, et plus précisément un pas dont la longueur diminue d'amont en aval ; ainsi l'angle δ diminue lui-même d'amont en aval et on peut obtenir l'angle δ désiré en tronçonnant les hélicoïdes à l'emplacement approprié.

En conclusion, l'installation selon l'invention donne des résultats remarquables grâce à sa modularité qui permet de l'adapter à des espaces de géométries variées, sans réseau de gaine par exemple dans des voussoirs de véhicule, à ses possibilités de réglage de la zone à vitesse uniforme par exemple en asservissant la vitesse de rotation des motoventilateurs, et à son adaptabilité qui permet de se plier aux contraintes d'un grand nombre de situations ; il est ainsi possible par exemple de ventiler des volumes de formes irrégulières, en installant des groupes de soufflage différents aussi bien en ce qui concerne le nombre et l'orientation des dispositifs de soufflage, que le nombre et l'angle de sortie des rampes de guidage. De même, le diamètre extérieur des hélices, qui est fonction de critères de bruit pour les débits souhaités peut être compris dans une très large gamme dépendant des volumes à ventiler, et des vitesses souhaitées à la distance imposée.

## Revendications

1. Installation de ventilation forcée notamment pour véhicules, comportant au moins une unité de soufflage comprenant un motoventilateur et des dispositifs de soufflage (1, 2) tels que des buses, installation **caractérisée en ce qu'**à chaque motoventilateur, est relié un groupe de soufflage comprenant un dispositif de soufflage central (1) et au moins deux dispositifs de soufflage périphériques (2) répartis autour du dispositif de soufflage central, les dispositifs de soufflage (1, 2) comportent une enveloppe tubulaire (11, 21) et un guide de soufflage (4) logé dans l'enveloppe et comprenant au moins trois rampes (41) de guidage de jet d'air s'étendant chacune, en allant d'amont en aval des dispositifs de soufflage, tout d'abord selon un plan radial, puis hélicoidalement le long d'une partie rectiligne d'un axe approximativement central du dispositif de soufflage.

2. Installation selon la revendication 1, **caractérisée en ce que** la partie rectiligne (Y-Y) de l'axe central des dispositifs de soufflage périphériques (2) est inclinée et diverge par rapport à celle de l'axe central (X-X) du dispositif de soufflage central (1) en allant vers l'aval.

3. Installation selon la revendication 1, **caractérisée en ce que** les rampes de guidage (41) sont des ailettes s'étendant chacune tout d'abord selon un plan radial puis en forme d'hélicoïde dans l'enveloppe (11, 21) du dispositif de soufflage (1, 2).

4. Installation selon la revendication 1, **caractérisée en ce qu'**elle comporte plusieurs rampes de guidage (41) s'étendant chacune tout d'abord selon un plan radial puis en forme d'hélicoïde autour d'une tige (42) s'étendant axialement dans l'enveloppe (11, 21) du dispositif de soufflage (1, 2).

5. Installation selon la revendication 1, **caractérisée en ce que** le guide de soufflage (4) est monté fixe dans l'enveloppe (11, 21) du dispositif de soufflage (1, 2).

6. Installation selon la revendication 1, **caractérisée en ce que** les parties hélicoïdales des rampes de guidage (41) des dispositifs de soufflage central (1) et périphériques (2) d'un même groupe de soufflage s'étendent en forme d'hélicoïdes enroulées dans le même sens.

7. Installation selon la revendication 1, **caractérisée en ce qu'**elle comporte plusieurs unités de soufflage, et les parties hélicoïdales des rampes de guidage (41) des dispositifs de soufflage (1, 2) de toutes les unités s'étendent en forme d'hélicoïdes enroulées dans le même sens.

8. Installation selon la revendication 1, **caractérisée en ce que** les dispositifs de soufflage périphérique (2) émettent chacun un jet de gaz de ventilation dont une région se mélange avec une région respective d'un jet de gaz de ventilation émis par le dispositif de soufflage central (1).

9. Installation selon la revendication 1, **caractérisée en ce que** les dispositifs de soufflage périphériques (2) émettent chacun un jet de gaz de ventilation dont au moins une région se mélange avec une région du jet de gaz de ventilation émis par un autre dispositif de soufflage périphérique (2).

10. Installation selon la revendication 1, **caractérisée en ce que** les dispositifs de soufflage périphérique (2) émettent chacun un jet de gaz de ventilation dont deux régions se mélangent chacune avec une région d'un jet de gaz de ventilation émis par un autre dispositif de soufflage périphérique (2) respectif.

11. Installation selon la revendication 1, **caractérisée en ce que** les dispositifs de soufflage (1, 2) émettent chacun un jet de gaz de ventilation s'épanouissant avec une forme générale approximativement tronconique.

12. Installation selon la revendication 1, **caractérisée en ce que** le groupe de soufflage émet un gaz de ventilation dont la vitesse, dans un volume situé à quelques décimètres en aval des guides de soufflage (4), est approximativement uniforme et de l'ordre de 0,3 à 0,6 m/s.

13. Installation selon la revendication 1, **caractérisée en ce que** le groupe de soufflage débite un gaz de ventilation avec un débit égal approximativement à 300m³/h.

14. Installation selon la revendication 1, **caractérisée en ce qu'**elle comprend au moins un groupe de soufflage comportant un dispositif de soufflage central (1) à quatre rampes de guidage (41), et quatre dispositifs de soufflage périphériques (2) à trois rampes de guidage (41).

15. Installation selon la revendication 1, **caractérisée en ce qu'**elle comprend au moins un groupe de soufflage comportant un dispositif de soufflage central (1) à trois rampes de guidage (41), et quatre dispositifs de soufflage périphériques (2) également à trois rampes de guidage (41).

16. Installation selon la revendication 1, **caractérisée en ce qu'**elle comprend au moins un groupe de soufflage comportant un dispositif de soufflage central (1) à trois rampes de guidage (41), et six dispositifs de soufflage périphériques (2) également à trois rampes de guidage (41).

17. Installation selon la revendication 1, **caractérisée en ce que** la partie hélicoïdale des rampes de guidage (41) présente un pas variable dont la longueur diminue d'amont en aval.

## Claims

1. Forced ventilation device, particularly for vehicles, comprising at least one blower including a motorised fan and blowing devices (1, 2) such as nozzles, the installation being **characterised in that** to each motorised fan there is connected a blowing unit which has a central blowing device (1) and at least two peripheral blowing devices (2) spread around the central blowing device, and the blowing devices (1, 2) have a tubular casing (11, 21) and a blowing guide (4) housed in the casing and with at least three ramps (41) for guiding the jet of air, each extending from upstream to downstream of the blowing devices, first of all along a radial plane and then in a spiral along a straight portion of an approximately central axis of the blowing device.

2. A device according to Claim 1, **characterised in that** the straight portion (Y-Y) of the central axis of the peripheral blowing devices (2) is at an angle and diverges from that of the central device (X-X) of the central blowing device (1) by going downstream.

3. A device according to Claim 1, **characterised in that** the guide ramps (41) are vanes, each extending first of all along a radial plane and then in the shape of a spiral in the casing (11, 21) of the blowing device (1, 2).

4. A device according to Claim 1, **characterised in that** it has several guide ramps (41), each extending first of all along a radial plane and then in the shape of a spiral around a rod (42) extending axially in the casing (11,21) of the blowing device (1, 2).

5. A device according to Claim 1, **characterised in that** the blowing guide (4) is fixed in the casing (11, 21) of the blowing device (1, 2).

6. A device according to Claim 1, **characterised in that** the helical portions of the guide ramps (41) of the central (1) and peripheral (2) blowing devices of the same blowing unit extend in the shape of a spiral wound in the same direction.

7. A device according to Claim 1, **characterised in that** it has several blowing units and the helical portions of the guide ramps (41) of the blowing devices (1,2) of all the units extend in the shape of a spiral wound in the same direction.

8. A device according to Claim 1, **characterised in that** the peripheral blowing devices (2) each sends a jet of ventilation gas, a region of which is mixed with a respective region of a ventilation gas jet sent by the central blowing device (1).

9. A device according to Claim 1, **characterised in that** the peripheral blowing devices (2) each sends a jet of ventilation gas, at least one region of which is mixed with a region of the ventilation gas jet sent by another peripheral blowing device.

10. A device according to Claim 1, **characterised in that** the peripheral blowing devices (2) each sends a jet of ventilation gas, two regions of which each mixes with a region of a ventilation gas jet sent by another respective peripheral blowing device (2).

11. A device according to Claim 1, **characterised in that** the blowing devices (1, 2) each sends a jet of ventilation gas jet which spreads out in a more or less truncated shape.

12. A device according to Claim 1, **characterised in that** the blowing unit sends a ventilation gas, the rate of which, in a volume located a few decimetres downstream of the blowing guides (4), is approximately uniform and in the region of 0.3 to 0.6 metres/sec.

13. A device according to Claim 1, **characterised in that** the blowing unit delivers ventilation gas at an output rate equal approximately to 300 cu.m/hr.

14. A device according to Claim 1, **characterised in that** it includes at least one blowing unit comprising a central blowing device (1) with four guide ramps (41), and four peripheral blowing devices (2) with three guide ramps (41).

15. A device according to Claim 1, **characterised in that** it has at least one blowing unit comprising a central blowing device (1) with three guide ramps (41), and four peripheral blowing devices (2) also with three guide ramps (41).

16. A device according to Claim 1, **characterised in that** it has at least one blowing unit comprising a central blowing device (1) with three guide ramps (41), and six peripheral blowing devices (2) also with three guide ramps (41).

17. A device according to Claim 1, **characterised in that** the helical portion of the guide ramps (41) has a variable pitch, the length of which decreases from upstream to downsteam.

## Patentansprüche

1. Zwangsbelüftungsvorrichtung, insbesondere für Fahrzeuge, aufweisend zumindest eine Blaseinheit mit einem Lüfter und Blaseinrichtungen (1, 2), wie etwa Düsen, **dadurch gekennzeichnet, dass** jeder Lüfter mit einer Blasgruppe verbunden ist, die eine zentrale Blaseinrichtung (1) und zumindest zwei periphere Blaseinrichtungen aufweist, die um die zentrale Blaseinrichtung verteilt sind, wobei die Blaseinrichtungen (1, 2) ein rohrförmiges Gehäuse (11, 21) und eine Blasführung (4) umfassen, die in dem Gehäuse angeordnet ist, und zumindest drei Luftstrahlführungsrampen (41), die sich jeweils von den Blaseinrichtungen von stromauf nach stromab zunächst entlang einer radialen Ebene und daraufhin spiralförmig entlang eines geradlinigen Teils einer in etwa zentralen Achse der Blaseinrichtung erstrecken.

2. Vorrichtung nach Anspruch 1, **dadurch gekennzeichnet, dass** der geradlinige Teil (Y-Y) der zentralen Achse der peripheren Blaseinrichtungen (2) geneigt verläuft und relativ von dieser von der zentralen Achse (X-X) der zentralen Blaseinrichtung (1) stromabwärts verlaufend abweicht.

3. Vorrichtung nach Anspruch 1, **dadurch gekennzeichnet, dass** die Führungsrampen (41) Flugel sind, die sich jeweils zunächst entlang einer radialen Ebene erstrecken und darauthin in dem Gehause (11, 21) der Blaseinrichtung (1, 2) spiralförmig verlaufen.

4. Vorrichtung nach Anspruch 1, **dadurch gekennzeichnet, dass** sie mehrere Führungsrampen (41) aufweist, die sich jeweils zunächst entlang einer radialen Ebene erstrecken und daraufhin um eine Stange (42) spiralförmig verlaufen, die sich axial in dem Gehäuse (11, 21) der Blaseinrichtung (1, 2) erstreckt.

5. Vorrichtung nach Anspruch 1, **dadurch gekennzeichnet, dass** die Blasführung (4) in dem Gehäuse (11, 21) der Blaseinrichtung (1, 2) stationär angebracht ist.

6. Vorrichtung nach Anspruch 1, **dadurch gekennzeichnet, dass** die spiralförmigen Teile der Führungsrampe (41) der zentralen (1) und peripheren (2) Blaseinrichtungen ein und derselben Blasgruppe sich spiralförmig mit demselben Drehsinn erstrecken.

7. Vorrichtung nach Anspruch 1, **dadurch gekennzeichnet, dass** sie mehrere Blaseinheiten umfasst, und dass die spiralförmigen Teile der Führungsrampen (41) der Blaseinrichtungen (1, 2) sämtlicher Einheiten sich spiralförmig mit demselben Drehsinn erstrecken.

8. Vorrichtung nach Anspruch 1, **dadurch gekennzeichnet, dass** die peripheren Blaseinrichtungen (2) jeweils einen Belüftungsgasstrahl aussenden, von dem sich ein bereich mit einem jeweiligen Bereich eines Belüftungsgasstrahls mischt, der durch die zentrale Blaseinrichtung (9) ausgesendet wird.

9. Vorrichtung nach Anspruch 1, **dadurch gekennzeichnet, dass** die peripheren Blaseinrichtungen (2) jeweils einen Belüftungsgasstrahl aussenden, von dem zumindest ein Bereich sich mit einem Bereich eines Beluftungsgasstrahls mischt, der durch eine andere periphere Blaseinrichtung (2) ausgestrahlt wird.

10. Vorrichtung nach Anspruch 1, **dadurch gekennzeichnet, dass** die peripheren Blaseinrichtungen (2) jeweils einen Belüftungsgasstrahl aussenden, von dem zwei Bereiche sich jeweils mit einem Bereich eines Belüftungsgasstrahls mischen, der durch eine jeweilige andere periphere Blaseinrichtung (2) ausgesendet wird.

11. Vorrichtung nach Anspruch 1, **dadurch gekennzeichnet, dass** die Blaseinrichtungen (1, 2) jeweils einen Belüftungsgasstrahl aussenden, der sich mit einer allgemein in etwa kegelstumpfförmigen Gestalt trompetenförmig erweitert.

12. Vorrichtung nach Anspruch 1, **dadurch gekennzeichnet, dass** die Blasgruppe ein Belüftungsgas ausstrahlt, dessen Geschwindigkeit in einem Volumen, das einige Dezimeter stromabwärts von den Blasführungen (4) zu liegen kommt, ungefähr gleichförmig verläuft und in der Größenordnung von 0,3 bis 0,6 m/s beträgt.

13. Vorrichtung nach Anspruch 1, **dadurch gekennzeichnet, dass** die Blasgruppen ein Belüftungsgas mit einem Durchsatz gleich ungefähr 300 m³/h austrägt.

14. Vorrichtung nach Anspruch 1, **dadurch gekennzeichnet, dass** sie zumindest eine Blasgruppe umfasst, die eine zentrale Blaseinrichtung (1) mit vier Führungsrampen (41) und vier periphere Blaseinrichtungen (2) mit drei Führungsrampen (41) aufweist.

15. Vorrichtung nach Anspruch 1, **dadurch gekennzeichnet, dass** sie zumindest eine Blasgruppe umfasst, die eine zentrale Blaseinrichtung (1) mit drei Führungsrampen (41) und vier periphere Blaseinrichtungen (2) ebenfalls mit drei Fuhrungsrampen (41) aufweist.

16. Vorrichtung nach Anspruch 1, **dadurch gekennzeichnet, dass** sie zumindest eine Blasgruppe umfasst, die eine zentrale Blaseinrichtung (1) mit drei Führungsrampen (41) und sechs periphere Blaseinrichtungen (2) ebenfalls mit drei Führungsrampen (41) aufweist.

17. Vorrichtung nach Anspruch 1, **dadurch gekennzeichnet, dass** der spiralförmige Teil der Führungsrampe (41) eine variable Steigung aufweist, deren Länge von stromaufwärts nach stromabwärts abnimmt.
